# FASCICULE DE BREVET EUROPEEN

(11) **EP 3 789 183 B1**
(45) Date de publication et mention de la délivrance du brevet: **09.11.2022**
(21) Numéro de dépôt: 20189897.0
(22) Date de dépôt: 06.08.2020
(51) Int. Cl.: B29C 51/10, B29C 51/12, B29C 51/20, B29C 51/30, B29C 51/36, B60R 13/02

(54) **PROCÉDÉ ET DISPOSITIF DE RÉALISATION D'UNE PIÈCE DE GARNITURE STRATIFIÉE ET PIÈCE OBTENUE**
VERFAHREN UND VORRICHTUNG ZUR HERSTELLUNG EINER MEHRSCHICHTIGEN DICHTUNG, UND SO ERHALTENE DICHTUNG
METHOD AND DEVICE FOR MANUFACTURING A LAMINATED TRIM PART AND PART OBTAINED

(30) Priorité: 03.09.2019 FR 1909674
(43) Date de publication de la demande: 10.03.2021
(73) Titulaire: SMRC Automotive Holdings Netherlands B.V., 1101 BA Amsterdam (NL)
(72) Inventeur: COSTENOBLE, Didier, 59136 Wavrin (FR); LEVECQUE, Ronny, 59295 Estrun (FR)
(74) Mandataire: Cabinet Nuss

(56) Documents cités:
- DE-A1-102010 017 321
- FR-A1- 3 014 007

## Description

La présente invention concerne le domaine de la fabrication par laminage de pièces stratifiées, notamment de pièces de garniture ou d'habillage intérieur de véhicules automobiles, et a pour objet un procédé et un dispositif pour la réalisation de telles pièces, ainsi qu'une pièce résultante.

Les pièces stratifiées visées dans la présente comprennent, d'une part, un substrat (généralement une plaque ou un panneau en un matériau thermoplastique, moussé ou non, surfaciquement étendu et avec une géométrie tridimensionnelle (donnée par le moule d'injection ou obtenue par exemple par thermoformage) qui confère à la pièce sa résistance mécanique et ses sites de fixation et de montage et, d'autre part, une peau rapportée sur la face apparente du substrat et conférant à la pièce son aspect visuel et sa texture de surface.

De manière connue, la peau peut être solidarisée avec le substrat par collage à froid ou à chaud durant une opération de laminage par aspiration à travers le substrat (génération d'un différentiel de pression), permettant un contact continu et intime entre la peau et le substrat, en recouvrant toute la surface apparente de ce dernier.

Les pièces stratifiées précitées devant présenter une ou plusieurs zone(s) de bord périphérique(s) dépourvue(s) de peau (pour par exemple favoriser leur assemblage avec des pièces voisines), une ou plusieurs portion(s) de peau est(sont) enlevée(s) par découpe, en prévoyant notamment une gorge de découpage dans le substrat.

Cette méthode de production connue, en plus d'être fastidieuse et de nécessiter une gorge spécifiquement pour la découpe, présente en plus l'inconvénient de générer des chutes de peau importantes (gaspillage de matière première), notamment lorsque la pièce présente une forme géométrique à pourtour irrégulier (la peau se présentant généralement en pans rectangulaires pour pouvoir être mise en œuvre avec des dispositifs de laminage de forme rectangulaire).

En fait, le pan de peau utilisé, de forme rectangulaire, présente des dimensions en longueur et en largeur telles qu'il s'étend au-delà de la surface projetée du substrat à recouvrir (surdimensionnement), ce qui résulte en des chutes de découpe non seulement au niveau de la ou des zone(s) qu'il faut libérer de la peau, mais également dans les zones périphériquement en retrait ou concave(s) dudit substrat.

Par le document DE 10 2010 017 321, on connait une pièce de garniture stratifiée, avec une couche support inférieure alvéolée et une couche de revêtement superficielle étanche à l'air et recouvrant la totalité de la face apparente de la pièce, ces deux couches formant ensemble un système ressort-masse acoustique.

Par le document FR 3 014 007, on connait un procédé de collage de pièces, et un dispositif pour sa mise en œuvre, dans lequel une partie délimitée d'une première pièce est recouverte extérieurement d'une seconde pièce formant couche de revêtement, laquelle est prédécoupée à la forme de la parie à recouvrir de la première pièce et assemblée avec elle par collage sous pression.

Par le document US 2018/0178443, on connaît un procédé de laminage d'un film décoratif sur une pièce (toit de voiture) avec recouvrement seulement partiel de la surface de ladite pièce, l'application étant réalisée sous vide. Ce procédé est réalisé au moyen d'un dispositif comprenant une enceinte étanche renfermant la pièce à recouvrir, le film de recouvrement et un cadre de serrage maintenant le film en le pinçant. Le film constitue avec le cadre une paroi étanche compartimentant le volume intérieur de l'enceinte. La création d'un vide partiel dans le compartiment renfermant la pièce provoque une déformation du cadre et une application du film sur la surface à recouvrir (délimitée par le cadre) de la pièce.

Le matériel nécessaire pour la mise en œuvre de ce procédé est toutefois complexe, encombrant et onéreux (enceinte avec deux compartiments étanches, cadre déformable). En outre, la qualité de l'application de la peau ne peut être vérifiée directement et immédiatement par un opérateur.

La présente invention a pour but de proposer une solution, en termes de procédé et de dispositif, permettant de surmonter au moins les principales limitations de l'état de la technique évoquées ci-dessus.

A cet effet, l'invention a pour objet un procédé de réalisation d'une pièce de garniture stratifiée par recouvrement d'un substrat tridimensionnel avec une peau appliquée par laminage sous vide ou par succion, ladite pièce comportant au moins une portion de substrat périphérique particulière non recouverte par ladite peau,
procédé caractérisé en ce qu'il consiste :
à fournir un support de substrat avec une surface d'appui présentant une forme conjuguée à celle de la face du substrat opposée à la face à recouvrir, et qui est pourvu d'une partie inférieure d'un cadre de serrage ou de pincement périphérique entourant ledit support, mais de laquelle dépasse de manière sous-jacente au moins une portion de support latérale spécifique,
à disposer le substrat à recouvrir sur le support de telle manière que ladite au moins une portion de substrat périphérique particulière repose sur ladite au moins une portion de support latérale spécifique,
à fournir un pan de peau de taille adaptée au cadre,
à fournir une substance thermoadhésive ou adhésive à froid, rapportée sur le substrat ou sur la face arrière de la peau,
à disposer ladite peau, le cas échéant après chauffage, sur le substrat monté sur le support, avec interposition de la couche de substance adhésive et de telle manière qu'elle dépasse latéralement de la partie de cadre inférieure sur toute la circonférence de ce dernier,
à amener une partie de cadre de serrage ou de pincement supérieure, de forme complémentaire à la partie de cadre inférieure,
à pincer la peau de manière étanche à l'air entre les deux parties de cadre complémentaires mutuellement coopérantes,
à générer un effet d'aspiration ou de succion à travers le substrat de manière à appliquer intimement la partie du pan de peau située à l'intérieur du cadre contre le substrat,
à dégager la partie de cadre supérieure, éventuellement après écoulement d'une durée prédéterminée, et,
à retirer la pièce formée par le substrat partiellement recouvert par la peau, et à découper le cas échéant les portions de peau non solidarisées avec le substrat.

Selon d'autres aspects de l'invention, un dispositif pour la mise en œuvre de ce procédé et une pièce de garniture stratifiée obtenue par ce procédé sont également visés.

L'invention sera mieux comprise grâce à la description ci-après, qui se rapporte à des modes de réalisation préférés, donnés à titre d'exemples non limitatifs, et expliqués avec référence aux dessins schématiques annexés, dans lesquels :
[Fig. 1A] et
[Fig. 1B] sont des vues respectivement en perspective et en coupe d'un mode de réalisation d'un dispositif pour la fabrication d'une pièce de garniture stratifiée par laminage sous vide, par mise en œuvre du procédé selon l'invention ;
[Fig. 1C] est une vue en perspective d'une partie du dispositif des figures 1A et 1B, montrant notamment le cadre de serrage et le support de substrat ;
[Fig. 2A] et
[Fig. 2B] sont respectivement des vues en perspective (2A) et de dessus (2B) du dispositif partiel représenté sur la figure 1C après mise en place du substrat sur le support de substrat ;
[Fig. 3] est une vue schématique en élévation latérale et en coupe du dispositif partiel tel que représenté sur la figure 1C ;
[Fig. 4] est une vue schématique partielle en coupe selon A-A du dispositif représenté figure 3, et,
[Fig. 5],
[Fig. 6],
[Fig. 7],
[Fig. 8],

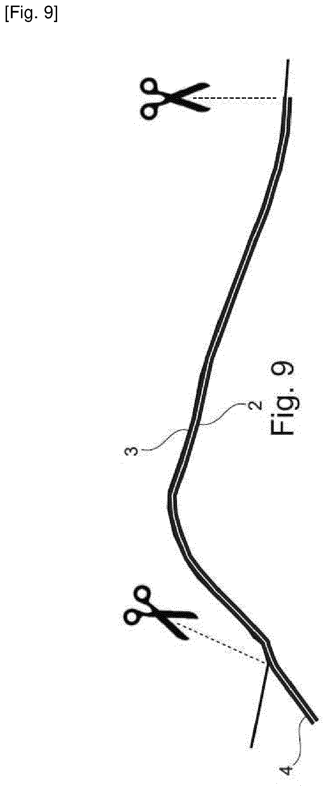

[Fig. 9] et

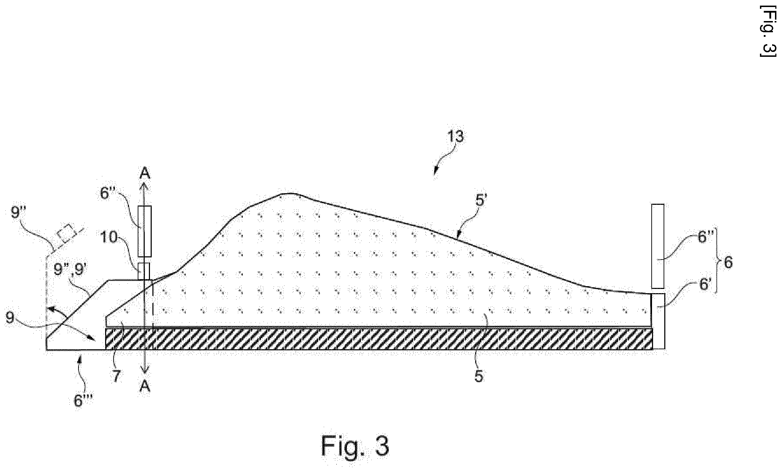

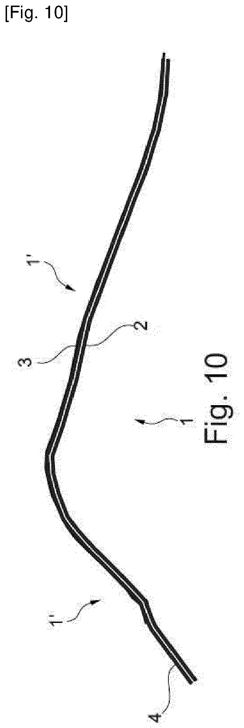

[Fig. 10] sont des représentations schématiques en coupe illustrant différentes étapes opératoires successives du procédé de réalisation selon l'invention, avec mise en œuvre d'un dispositif dans sa constitution partielle telle que représentée sur la figure 3.

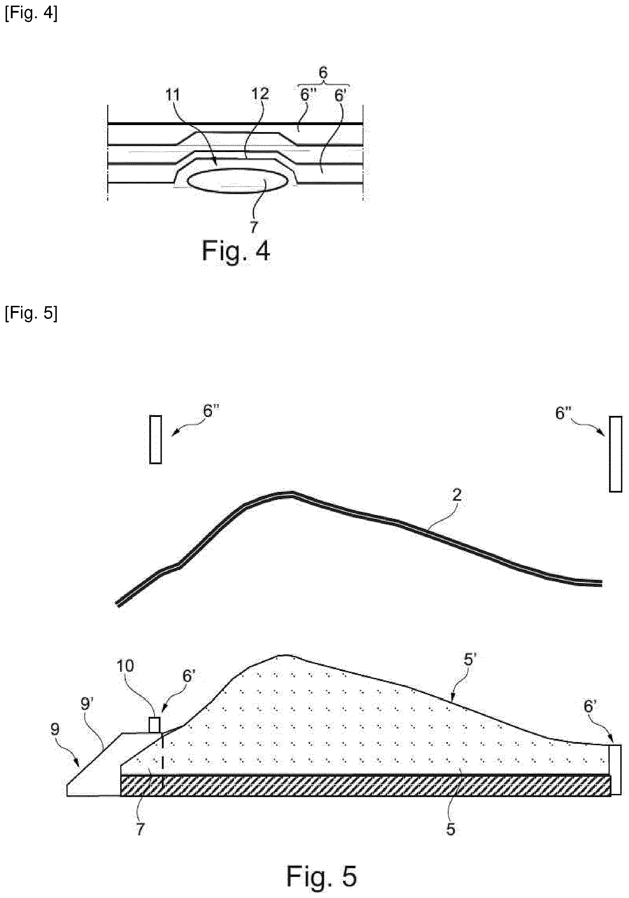

L'invention concerne, en premier lieu, un procédé de réalisation d'une pièce de garniture stratifiée 1 par recouvrement d'un substrat 2 tridimensionnel avec une peau 3 appliquée par laminage sous vide ou par succion, ladite pièce 1 comportant au moins une portion de substrat périphérique particulière 4 non recouverte par ladite peau 3 (sur les figures 5 à 10, le substrat 2 est représenté en coupe sous la forme de deux lignes pleines/continues parallèles).

Conformément à l'invention, et comme le montrent à titre d'exemple schématiquement les figures 5 à 10, ce procédé est caractérisé en ce qu'il consiste :
à fournir un support de substrat 5 avec une surface d'appui 5' présentant une forme conjuguée à celle de la face du substrat 2 opposée à la face 2' à recouvrir,
et qui est pourvu d'une partie inférieure 6' d'un cadre 6 de serrage ou de pincement périphérique entourant ledit support 5, mais de laquelle dépasse de manière sous-jacente au moins une portion de support latérale spécifique 7,
à disposer le substrat 2 à recouvrir sur le support 5 de telle manière que ladite au moins une portion de substrat périphérique particulière 4 repose sur ladite au moins une portion de support latérale spécifique 7,
à fournir un pan ou flanc 3' de peau 3 de taille adaptée au cadre 6,
à fournir une substance 8 thermoadhésive ou adhésive à froid, rapportée sur le substrat 2 ou sur la face arrière de la peau 3,
à disposer ladite peau 3, le cas échéant après chauffage, sur le substrat 2 monté sur le support 5, avec interposition de la couche de substance adhésive 8 et de telle manière qu'elle dépasse latéralement de la partie de cadre de pincement inférieure 6' sur toute la circonférence de ce dernier,
à amener une partie de cadre de serrage ou de pincement supérieure 6", de forme complémentaire à la partie de cadre inférieure 6',
à pincer la peau 3 de manière étanche à l'air entre les deux parties de cadre complémentaires 6' et 6" mutuellement coopérantes,
à générer un effet d'aspiration ou de succion à travers le substrat 2 de manière à appliquer intimement la partie du pan 3' de peau 3 située à l'intérieur du cadre 6 contre le substrat 2,
à dégager la partie de cadre supérieure 6", éventuellement après écoulement d'une durée prédéterminée, et,
à retirer la pièce 1 formée par le substrat 2 partiellement recouvert par la peau 3, et à découper le cas échéant les portions de peau 3 non solidarisées avec le substrat 2).

Grâce aux dispositions et à la séquence d'opérations précitées, dont notamment l'utilisation d'un dispositif 13 de laminage sous vide avec deux parties de cadre 6' et 6" coopérantes et un arrangement de la ou des portion(s) particulière(s) 4 du substrat 2 (ne devant pas comporter de peau 3 en surface), en dehors du cadre 6 délimitant la zone de recouvrement par le pan ou flanc 3' de peau 3, l'invention permet non seulement de limiter les chutes de peau 3, mais également de faciliter l'opération finale de découpe de la peau 3, puisque seules des bandes de peau 3 non solidarisées sont à couper.

La substance 8 peut être présente, préférentiellement en couche pleine et continue, ou alternativement de manière localisée, sur la face arrière du pan 3' de peau 3, au moins au niveau de la zone venant en contact avec le substrat 2. En variante, cette substance 8 peut aussi être présente ou appliquée (par exemple par pulvérisation) sur la zone de la face du substrat 2 destinée à recevoir le pan 3' de peau 3, avant ou après sa mise en place sur le support 5, et le cas échéant son activation par chauffage.

La substance adhésive 8 peut le cas échéant également être bi-composante avec une première composante présente sur la face arrière de la peau 3 et une autre sur la face apparente du substrat 2, l'activation de la fonction de collage devenant effective lors de l'application intime de la peau 3 sur le substrat 2, le cas échéant avec chauffage simultané et/ou application d'un catalyseur.

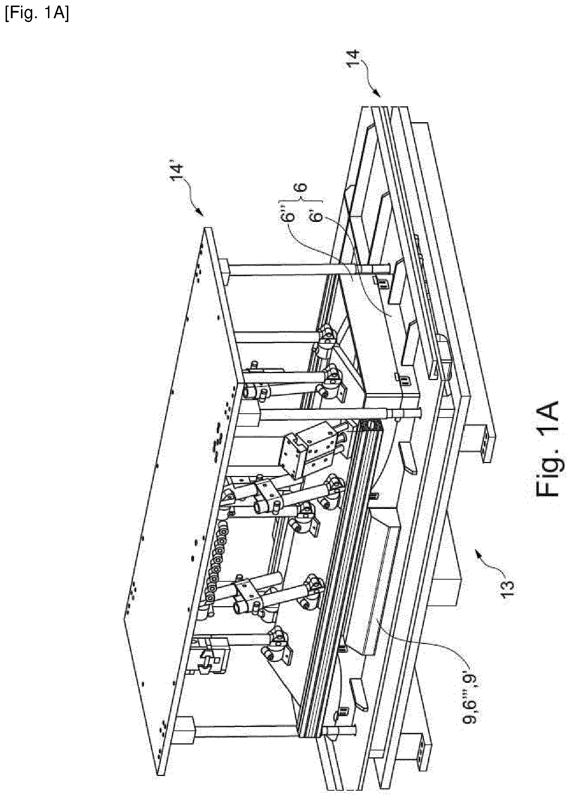

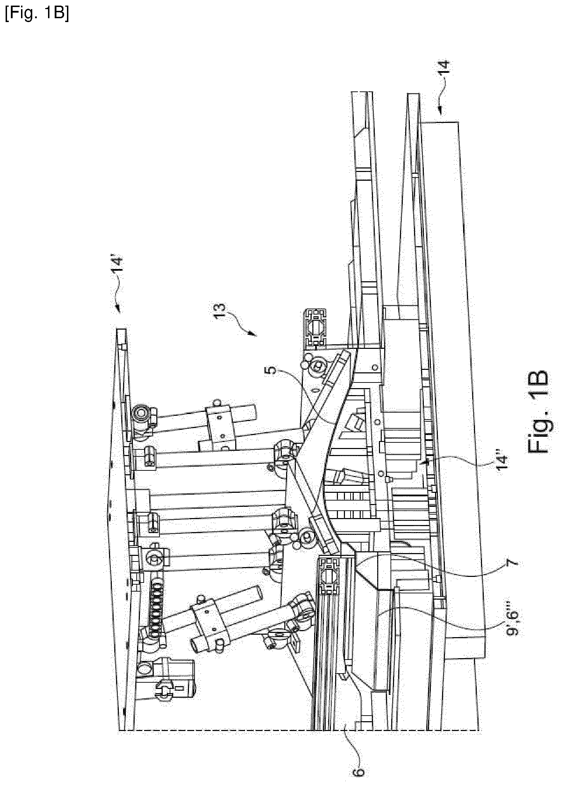

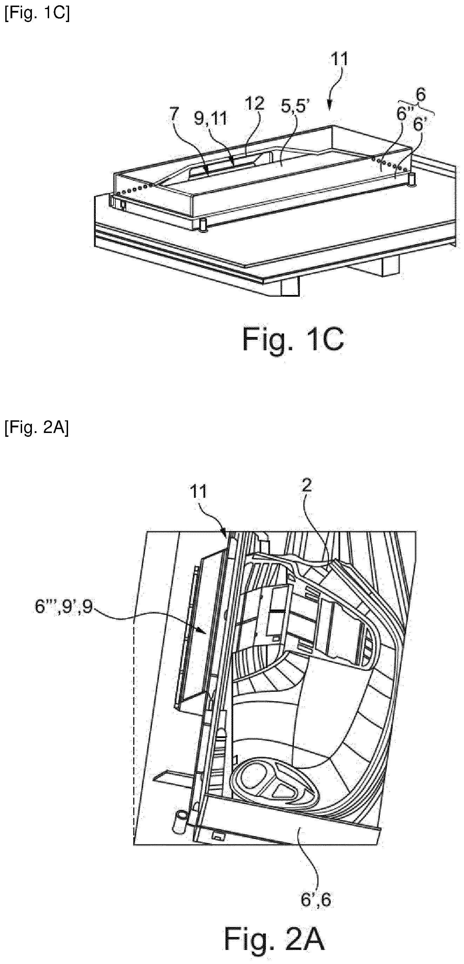

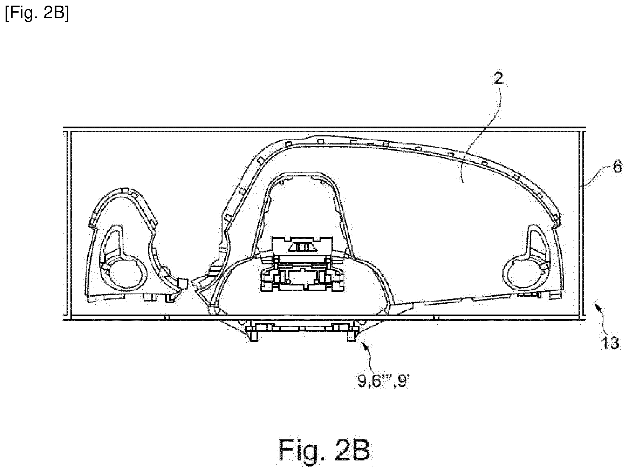

En accord avec une mise en œuvre préférée de l'invention, évitant toute perte de force d'aspiration tout en évitant une construction trop complexe du dispositif 13, et comme le montrent à titre d'exemples les figures 1, 2A, 3 et 5 à 8, ladite au moins une portion de support latérale spécifique 7 est, au moins durant la phase d'aspiration, située dans une chambre latérale correspondante 9 qui constitue ensemble avec le support de substrat 5, avec la partie inférieure 6' du cadre de pincement ou de serrage 6 et avec la peau 3, une enceinte sensiblement étanche à l'air.

Bien que la description qui suit et les dessins annexés visent plus particulièrement, pour des raisons de simplicité, un mode de réalisation de l'invention avec une unique portion particulière 4 de substrat 2, une unique portion spécifique 7 du support 5 et une unique chambre latérale 9, l'homme du métier comprend que l'invention couvre également des variantes de réalisation dans lesquelles plusieurs portions 4 et 7 et plusieurs chambres 9 sont présentes.

De même, l'homme du métier sait que la partie du pan 3' de peau 3 située à l'intérieur du cadre 6 après rapprochement avec serrage des parties de cadre inférieure 6' et supérieure 6" avec pincement circonférentiel périphérique de la peau 3 entre elles, doit présenter une extension surfacique suffisante pour recouvrir la totalité de la surface non plane de la face apparente 2' du substrat 2, sans compromettre l'intégrité, voire même l'épaisseur sensiblement homogène, de ladite peau 3 après application.

En accord avec un mode de réalisation préféré de l'invention, la ou chaque chambre latérale 9 est formée par le volume intérieur d'une protubérance latérale locale 6'" de la partie de cadre inférieure 6', d'un seul tenant ou rapportée et définissant une cavité ou poche qui est ouverte vers l'intérieur dudit cadre 6 et isolée hermétiquement par rapport à l'environnement extérieur.

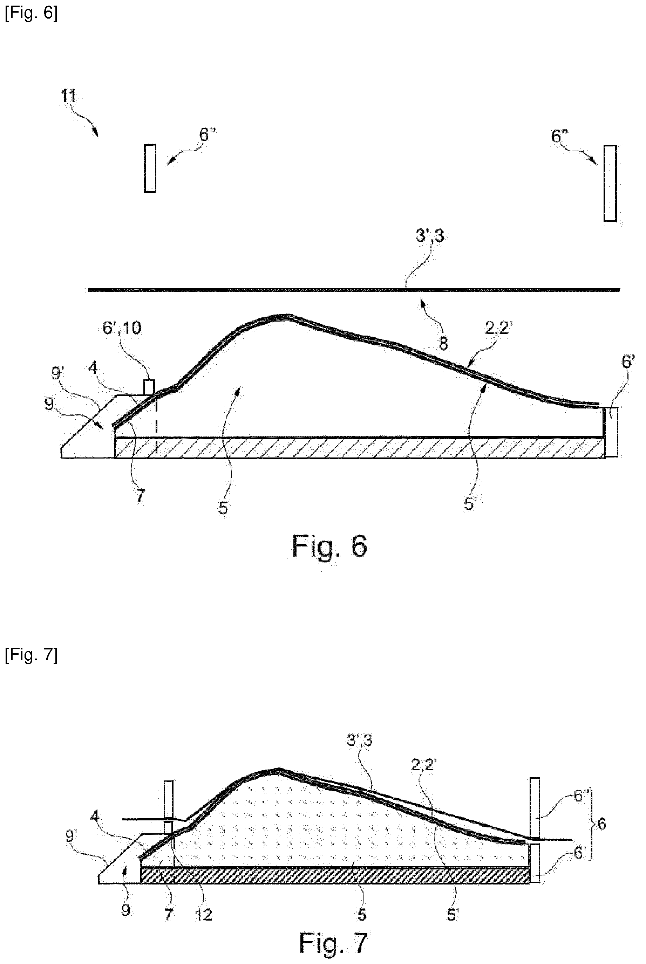

Avantageusement, et comme cela ressort notamment des figures 5 et 6, il est prévu que lors de la mise en place du substrat 2 sur le support 5, la portion de substrat périphérique particulière 4 considérée soit introduite dans la chambre latérale 9 correspondante au niveau d'une ouverture 11 délimitée conjointement par une découpe 12 ou un segment séparable 10 de la partie de cadre inférieure 6' et par la portion de support latérale spécifique 7 s'étendant à travers cette découpe 12 le bord de ladite découpe 12 fixant la limite entre les portions de la face apparente 1' de la pièce 1 respectivement recouverte et dépourvue de peau 3.

Selon une première variante de mise en œuvre, la portion de substrat périphérique particulière 4 est glissée à travers l'ouverture 11 lors de la mise en place du substrat 2, ledit substrat 2 venant préférentiellement en appui contre le bord de la découpe 12, avantageusement sur toute la largeur de l'ouverture 11.

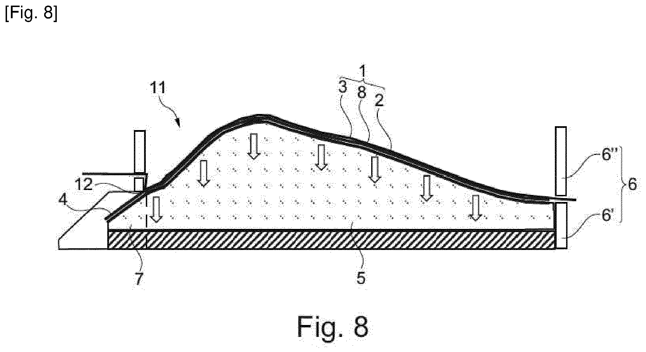

Comme le montre la figure 8, du fait de l'aspiration, le pan 3' de peau 3 vient se plaquer intimement contre le bord de la découpe 12 et dans l'arête qu'il forme avec le substrat 2, délimitant de manière précise la portion 4.

La protubérance latérale 6'" formant la chambre 9 peut être constituée par une portion déformée du cadre inférieur 6' ou par un capot 9' rapporté sur ledit cadre inférieur 6' au niveau d'une partie découpée ou ajourée de la paroi de ce dernier.

Selon une autre variante de mise en œuvre, il peut être prévu que la chambre latérale 9 comporte un volet 9" formant couvercle, par exemple pivotant, lequel est déplacé entre une position ouverte, dans laquelle la portion de substrat périphérique particulière 4 considérée peut être disposée sur ou enlevée de la portion de support latérale spécifique 7, lors de la mise en place du substrat 2 sur le support 5 ou de l'enlèvement de la pièce de garniture 1, et une position fermée dans laquelle la chambre latérale 9 constitue une poche étanche avec le cadre 6, lors de la phase d'aspiration au moins. La figure 3 montre schématiquement et à titre d'exemple le volet 9" en position fermée (trait plein) et en position ouverte (trait interrompu).

Il peut en outre être prévu que le volet mobile 9" comprenne ou intègre un segment séparable 10 de la partie de cadre inférieure 6', qui est positionné dans la continuité et raccord avec le reste de ladite partie de cadre inférieure 6' lorsque ledit volet 9" est en position fermée.

De manière préférée, en relation avec cette autre variante constructive, la portion de substrat périphérique particulière 4 est pincée, préférentiellement de manière étanche à l'air, entre le support de substrat 5 et le volet 9", en position fermée de ce dernier. Un pincement similaire peut être obtenu dans le cadre de la première variante ci-dessus, lorsque le bord de la découpe 12 vient en application ajustée sur le substrat 2.

Conformément à une caractéristique éventuelle de l'invention, le procédé peut prévoir que, préalablement à sa mise en place sur le support de substrat 5, le substrat 2 soit soumis à une opération de perméabilisation à l'air (par exemple par perforation multiple), lorsque sa paroi constitutive n'est pas réalisée en un matériau naturellement perméable aux gaz (ou dans un matériau qui ne l'est pas suffisamment, notamment lorsque la paroi du substrat 2 est relativement épaisse.

L'invention concerne également un dispositif 13 pour la réalisation d'une pièce de garniture 1 stratifiée, ce par l'intermédiaire du procédé décrit précédemment.

Ce dispositif 13, qui est illustré à titre d'exemple sur les figures 1 et 3, comprend un support de substrat 5 pourvu périphériquement d'une partie inférieure 6' d'un cadre 6 de serrage ou de pincement et pouvant être relié sélectivement à une source de vide ou d'aspiration et une partie supérieure 6" complémentaire dudit cadre 6, les deux parties de cadre inférieure et supérieure 6' et 6" étant configurées pour pincer de manière étanche un pan ou flanc 3' de peau 3 entre elles.

Ce dispositif 13 est caractérisé en ce qu'au moins une portion latérale spécifique 7 du support de substrat 5 est située à l'extérieur de la partie de cadre inférieure 6', préférentiellement dans une chambre 9 attenante latéralement à cette partie.

Le cas échéant, cette chambre latérale 9 comporte un volet mobile 9" formant couvercle, par exemple pivotant, permettant de dégager une ouverture d'accès à la portion de support latérale spécifique 7.

Toutefois, et de manière préférée, cette chambre 9 consiste en un volume délimité par un capot ou une coque 9' fixée de manière rigide et étanche sur la partie de cadre inférieure 6', le long du bord d'une découpe 12 définissant avec la portion de support latérale spécifique 7 une ouverture 11 à travers laquelle la portion 4 du substrat 2 peut être mise en place sur ladite portion de support spécifique 7.

Comme le montrent les figures 1 et partiellement les figures 3 et 5 à 8, le support de substrat 5 et la partie inférieure 6' du cadre 6 peuvent être montés sur un plateau 14 intégrant également les moyens d'aspiration 14" et la connectique associée (Fig. 1B). La partie supérieure 6" du cadre 6 peut quant à elle être montée avec faculté de coulissement vertical sur une structure support 14' portant également les actionneurs nécessaires aux différentes manœuvres (Fig. 1A).

Enfin, l'invention vise également une pièce de garniture intérieure pour véhicule automobile, comprenant un substrat 2, par exemple sous la forme d'une plaque ou d'un panneau à structure tridimensionnelle, notamment en un matériau perméable à l'air, et une peau 3, sensiblement étanche à l'air, rapportée sur le substrat 2 par laminage sous vide et collage pour former la face apparente 1' de la pièce 1.

Cette pièce 1 est selon l'invention obtenue par l'intermédiaire du procédé de réalisation décrit précédemment et présente au moins une portion ou zone latérale périphérique particulière 4 du substrat 2 dépourvue de peau 3, de telle manière que la face apparente 1' de la pièce 1 présente des portions respectivement recouverte et dépourvue de peau 3.

A titre d'exemple non limitatif, le substrat 2 (par exemple un support de planche de bord) peut être réalisé par moulage par injection de polypropylène (épaisseur de l'ordre de 3 mm environ) et la peau peut consister en un bi-laminé du type [peau en TPO (polyoléfine) d'une épaisseur de 0,5 mm environ/couche de mousse polypropylène d'épaisseur 2 mm environ] ou du type [peau en PVC (polychlorure de vinyle)/couche de mousse en PVC expansé].

La substance adhésive 8 peut quant à elle consister en une résine synthétique en dispersion aqueuse, par exemple du type colle polyuréthane.

Bien entendu, l'invention n'est pas limitée aux modes de réalisation décrits et représentés aux dessins annexés. Des modifications restent possibles, notamment du point de vue de la constitution des divers éléments ou par substitution d'équivalents techniques, sans sortir pour autant du domaine de protection de l'invention.

## Revendications

1. Procédé de réalisation d'une pièce de garniture stratifiée (1) par recouvrement d'un substrat (2) tridimensionnel avec une peau (3) appliquée par laminage sous vide ou par succion, ladite pièce (1) comportant au moins une portion de substrat périphérique particulière (4) non recouverte par ladite peau (3),
procédé **caractérisé en ce qu'**il consiste :
à fournir un support de substrat (5) avec une surface d'appui (5') présentant une forme conjuguée à celle de la face du substrat (2) opposée à la face (2') à recouvrir, et qui est pourvu d'une partie inférieure (6') d'un cadre (6) de serrage ou de pincement périphérique entourant ledit support (5), mais de laquelle dépasse de manière sous-jacente au moins une portion de support latérale spécifique (7),
à disposer le substrat (2) à recouvrir sur le support (5) de telle manière que ladite au moins une portion de substrat périphérique particulière (4) repose sur ladite au moins une portion de support latérale spécifique (7),
à fournir un pan (3') de peau (3) de taille adaptée au cadre (6),
à fournir une substance (8) thermoadhésive ou adhésive à froid, rapportée sur le substrat (2) ou sur la face arrière de la peau (3),
à disposer ladite peau (3), le cas échéant après chauffage, sur le substrat (2) monté sur le support (5), avec interposition de la couche de substance adhésive (8) et de telle manière qu'elle dépasse latéralement de la partie de cadre inférieure (6') sur toute la circonférence de ce dernier,
à fournir et amener une partie supérieure de cadre de serrage ou de pincement (6"), de forme complémentaire à la partie de cadre inférieure (6'),
à pincer la peau (3) de manière étanche à l'air entre les deux parties de cadre complémentaires (6' et 6") mutuellement coopérantes,
à générer un effet d'aspiration ou de succion à travers le substrat (2) de manière à appliquer intimement la partie du pan (3') de peau (3) située à l'intérieur du cadre (6) contre le substrat (2),
à dégager la partie de cadre supérieure (6"), éventuellement après écoulement d'une durée prédéterminée, et,
à retirer la pièce (1) formée par le substrat (2) partiellement recouvert par la peau (3), et à découper le cas échéant les portions de peau (3) non solidarisées avec le substrat (2).

2. Procédé selon la revendication 1, **caractérisé en ce que** ladite au moins une portion de support latérale spécifique (7) est, au moins durant la phase d'aspiration, située dans une chambre latérale correspondante (9) qui peut constituer ensemble avec le support de substrat (5), avec la partie inférieure (6') du cadre de pincement ou de serrage (6) et avec la peau (3), une enceinte sensiblement étanche à l'air.

3. Procédé selon la revendication 2, **caractérisé en ce que** la ou chaque chambre latérale (9) est formée par le volume intérieur d'une protubérance latérale locale (6‴) de la partie de cadre inférieure (6'), d'un seul tenant ou rapportée et définissant une cavité ou poche qui est ouverte vers l'intérieur dudit cadre (6) et isolée hermétiquement par rapport à l'environnement extérieur.

4. Procédé selon la revendication 3, **caractérisé en ce que** lors de la mise en place du substrat (2) sur le support (5), la portion de substrat périphérique particulière (4) considérée est introduite dans la chambre latérale (9) correspondante au niveau d'une ouverture (11) délimitée conjointement par une découpe (12) ou un segment séparable (10) de la partie de cadre inférieure (6') et par la portion de support latérale spécifique (7) s'étendant à travers cette découpe (12) le bord de ladite découpe (12) fixant la limite entre les portions de la face apparente (1') de la pièce (1) respectivement recouverte et dépourvue de peau (3).

5. Procédé selon la revendication 4, **caractérisé en ce que** la portion de substrat périphérique particulière (4) est glissée à travers l'ouverture (11) lors de la mise en place du substrat (2), ledit substrat (2) venant préférentiellement en appui contre le bord de la découpe (12), avantageusement sur toute la largeur de l'ouverture (11).

6. Procédé selon l'une quelconque des revendications 2 à 4, **caractérisé en ce que** la chambre latérale (9) comporte un volet (9") formant couvercle, par exemple pivotant, lequel est déplacé entre une position ouverte, dans laquelle la portion de substrat périphérique particulière (4) considérée peut être aisément disposée sur ou enlevée de la portion de support latérale spécifique (7), lors de la mise en place du substrat (2) sur le support (5) ou de l'enlèvement de la pièce de garniture (1), et une position fermée dans laquelle la chambre latérale (9) constitue une poche étanche avec le cadre (6), lors de la phase d'aspiration au moins.

7. Procédé selon la revendication 6, **caractérisé en ce que** le volet (9') mobile comprend ou intègre un segment séparable (10) de la partie de cadre inférieure (6'), qui est positionné dans la continuité et raccord avec le reste de ladite partie de cadre inférieure (6') lorsque ledit volet (9") est en position fermée.

8. Procédé selon l'une quelconque des revendications 6 et 7, **caractérisé en ce que** la portion de substrat périphérique particulière (4) est pincée, préférentiellement de manière étanche à l'air, entre le support de substrat (5) et le volet (9"), en position fermée de ce dernier.

9. Procédé selon l'une quelconque des revendications 1 à 8, **caractérisé en ce que**, préalablement à sa mise en place sur le support de substrat (5), le substrat (2) est soumis à une opération de perméabilisation à l'air, lorsque sa paroi constitutive n'est pas réalisée en un matériau naturellement perméable aux gaz.

10. Dispositif (13) pour la réalisation d'une pièce de garniture (1) stratifiée, ce par l'intermédiaire du procédé selon l'une quelconque des revendications 1 à 9, ledit dispositif (13) comprenant un support de substrat (5) pourvu périphériquement d'une partie inférieure (6') d'un cadre (6) de serrage ou de pincement et pouvant être relié sélectivement à une source de vide ou d'aspiration et une partie supérieure (6") complémentaire dudit cadre (6), les deux parties de cadre inférieure et supérieure (6' et 6") étant configurées pour pincer de manière étanche un pan (3') de peau (3) entre elles,
dispositif (13) **caractérisé en ce qu'**au moins une portion latérale spécifique (7) du support de substrat (5) est située à l'extérieur de la partie de cadre inférieure (6'), préférentiellement dans une chambre (9) attenante latéralement à cette partie.

11. Pièce de garniture stratifiée (1), notamment pièce de garniture intérieure pour véhicule automobile, comprenant un substrat (2), par exemple sous la forme d'une plaque ou d'un panneau à structure tridimensionnelle, notamment en un matériau perméable à l'air, et une peau (3), sensiblement étanche à l'air, rapportée sur le substrat (2) par laminage sous vide et collage pour former la face apparente (1') de la pièce (1), ladite pièce (1) étant obtenue par l'intermédiaire du procédé de réalisation selon l'une quelconque des revendications 1 à 9 et **caractérisée en ce qu'**elle présente au moins une portion ou zone latérale périphérique particulière (4) du substrat (2) dépourvue de peau (3), de telle manière que la face apparente (1') de la pièce (1) présente des portions respectivement recouverte et dépourvue de peau (3).

## Patentansprüche

1. Verfahren zur Herstellung eines laminierten Verkleidungsteils (1) durch Bedeckung eines dreidimensionalen Substrats (2) mit einer Haut (3), die durch Vakuumlaminierung oder durch Saugen aufgebracht wird, wobei das Teil (1) wenigstens einen besonderen umlaufenden Substratteilbereich (4) aufweist, der nicht von der Haut (3) bedeckt ist,
wobei das Verfahren **dadurch gekennzeichnet ist, dass** es aus Folgendem besteht:
Bereitstellen eines Substratträgers (5) mit einer Auflagefläche (5') mit einer Form, die an jene der Seite des Substrats (2) angepasst ist, die der zu bedeckenden Seite (2') gegenüberliegt, und der mit einem unteren Abschnitt (6') eines umlaufenden Spann- oder Klemmrahmens (6) versehen ist, der den Träger (5) umgibt, von dem jedoch unterliegend wenigstens ein spezifischer seitlicher Trägerteilbereich (7) hervorsteht,
Anordnen des zu bedeckenden Substrats (2) auf dem Träger (5), so dass der wenigstens eine besondere umlaufende Substratteilbereich (4) auf dem wenigstens einen spezifischen seitlichen Trägerteilbereich (7) aufliegt, Bereitstellen einer Bahn (3') von Haut (3) mit einer Größe, die für den Rahmen (6) geeignet ist,
Bereitstellen einer warm- oder kaltklebenden Substanz (8), die auf das Substrat (2) oder die Rückseite der Haut (3) aufgebracht wird,
Anordnen der Haut (3), gegebenenfalls nach Erhitzen, auf dem Substrat (2), das auf dem Träger (5) angebracht ist, mit Zwischenlegung der Klebesubstanzschicht (8) und auf so eine Weise, dass sie von dem unteren Rahmenabschnitt (6') über den gesamten Umfang desselben seitlich hervorsteht,
Bereitstellen und Bringen eines oberen Spann- oder Klemmrahmenanschnitts (6") mit komplementärer Form zum unteren Rahmenabschnitt (6'), Klemmen der Haut (3) auf luftdichte Weise zwischen den zwei komplementären, miteinander zusammenwirkenden Rahmenabschnitten (6' und 6"),
Erzeugen einer Ansaug- oder Sogwirkung durch das Substrat (2), um den Abschnitt der Bahn (3') von Haut (3), der sich im Inneren des Rahmens (6) befindet, eng auf das Substrat (2) aufzubringen,
Freilegen des oberen Rahmenabschnitts (6"), eventuell nach Ablauf einer vorbestimmten Dauer, und,
Entnehmen des Teils (1), das von dem Substrat (2) gebildet ist, das teilweise von der Haut (3) bedeckt ist, und gegebenenfalls Abschneiden der Teilbereiche der Haut (3), die nicht fest mit dem Substrat (2) verbunden sind.

2. Verfahren nach Anspruch 1, **dadurch gekennzeichnet, dass** sich der wenigstens eine spezifische seitliche Trägerteilbereich (7) wenigstens während der Ansaugphase in einer entsprechenden Seitenkammer (9) befindet, die zusammen mit dem Substratträger (5), mit dem unteren Abschnitt (6') des Spann- oder Klemmrahmens (6) und mit der Haut (3) einen im Wesentlichen luftdichten Raum bilden kann.

3. Verfahren nach Anspruch 2, **dadurch gekennzeichnet, dass** die oder jede Seitenkammer (9) vom Innenvolumen eines lokalen seitlichen Vorsprungs (6'") des unteren Rahmenabschnitts (6') gebildet ist, einstückig oder angesetzt ist und eine Höhlung oder Tasche definiert, die zum Inneren des Rahmens (6) hin offen ist und von der äußeren Umgebung hermetisch isoliert ist.

4. Verfahren nach Anspruch 3, **dadurch gekennzeichnet, dass** bei der Anbringung des Substrats (2) auf dem Träger (5) der betrachtete besondere umlaufende Substratteilbereich (4) in die entsprechende seitliche Kammer (9) an einer Öffnung (11) eingeführt wird, die zusammen von einem Ausschnitt (12) oder einem trennbaren Segment (10) des unteren Rahmenabschnitts (6') und vom spezifischen seitlichen Trägerteilbereich (7) begrenzt wird, der sich durch diesen Ausschnitt (12) erstreckt, wobei der Rand des Ausschnitts (12) die Grenze zwischen dem von Haut (3) bedeckten bzw. freien Abschnitt der Sichtseite (1') des Teils (1) festlegt.

5. Verfahren nach Anspruch 4, **dadurch gekennzeichnet, dass** der besondere umlaufende Substratteilbereich (4) bei der Anbringung des Substrats (2) durch die Öffnung (11) gesteckt wird, wobei das Substrat (2) vorzugsweise am Rand des Ausschnitts (12) anliegt, vorteilhafterweise über die gesamte Breite der Öffnung (11).

6. Verfahren nach einem der Ansprüche 2 bis 4, **dadurch gekennzeichnet, dass** die seitliche Kammer (9) eine Klappe (9") aufweist, die einen Deckel bildet, zum Beispiel einen schwenkenden, der zwischen einer offenen Position, in welcher der betrachtete besondere umlaufende Substratteilbereich (4) bei der Anbringung des Substrats (2) auf dem Träger (5) oder der Entnahme des Verkleidungsteils (1) leicht auf dem spezifischen seitlichen Trägerteilbereich (7) angeordnet oder davon entfernt werden kann, und einer geschlossenen Position bewegt wird, in welcher die seitliche Kammer (9) eine mit dem Rahmen (6) dichte Tasche bildet, wenigstens bei der Ansaugphase.

7. Verfahren nach Anspruch 6, **dadurch gekennzeichnet, dass** die bewegliche Klappe (9') ein trennbares Segment (10) des unteren Rahmenabschnitts (6') umfasst oder integriert, das in Fortsetzung mit dem Rest des unteren Rahmenabschnitts (6') positioniert ist, wenn sich die Klappe (9") in geschlossener Position befindet.

8. Verfahren nach einem der Ansprüche 6 und 7, **dadurch gekennzeichnet, dass** der besondere umlaufende Substratteilbereich (4) zwischen dem Substratträger (5) und der Klappe (9") in geschlossener Position letzterer geklemmt wird, vorzugsweise luftdicht.

9. Verfahren nach einem der Ansprüche 1 bis 8, **dadurch gekennzeichnet, dass** vor seiner Anbringung auf dem Substratträger (5) das Substrat (2) einem Vorgang des Herstellens der Luftdurchlässigkeit unterzogen wird, wenn seine bildende Wand nicht aus einem auf natürliche Weise gasdurchlässigen Material hergestellt ist.

10. Vorrichtung (13) zur Herstellung eines laminierten Verkleidungsteils (1) mittels des Verfahrens nach einem der Ansprüche 1 bis 9, die Vorrichtung (13) umfassend einen Substratträger (5), der umlaufend mit einem unteren Abschnitt (6') eines Spann- oder Klemmrahmens (6) versehen ist und selektiv an eine Vakuum- oder Saugquelle angeschlossen werden kann, und einen oberen, komplementären Abschnitt (6") des Rahmens (6), wobei sowohl der untere als auch der obere Rahmenabschnitt (6' und 6") dazu ausgebildet sind, eine Bahn (3') von Haut (3) zwischen ihnen zu klemmen,
wobei die Vorrichtung (13) **dadurch gekennzeichnet ist, dass** sich wenigstens ein spezifischer seitlicher Teilbereich (7) des Substratträgers (5) außerhalb des unteren Rahmenabschnitts (6') befindet, vorzugsweise in einer Kammer (9), die seitlich an diesen Abschnitt angrenzt.

11. Laminiertes Verkleidungsteil (1), insbesondere Innenverkleidungsteil für ein Kraftfahrzeug, umfassend ein Substrat (2), zum Beispiel in Form einer Platte oder eines Paneels mit dreidimensionaler Struktur, insbesondere aus einem luftdurchlässigen Material, und eine im Wesentlichen luftdichte Haut (3), die durch Vakuumlaminierung und Verklebung auf das Substrat (2) aufgebracht ist, um die Sichtseite (1') des Teils (1) zu bilden, wobei das Teil (1) mittels des Herstellungsverfahrens nach einem der Ansprüche 1 bis 9 erhalten ist und **dadurch gekennzeichnet ist, dass** es wenigstens einen besonderen umlaufenden seitlichen Teilbereich oder Bereich (4) des Substrats (2) aufweist, der frei von Haut (3) ist, so dass die Sichtseite (1') des Teils (1) einen von Haut (3) bedeckten bzw. freien Abschnitt aufweist.

## Claims

1. Method for manufacturing a laminated trim part (1) by covering a three-dimensional substrate (2) with a skin (3) applied by lamination under vacuum or by suction, said part (1) having at least one particular peripheral substrate portion (4) which is not covered by said skin (3),
said method being **characterized in that** it consists in:
providing a substrate support (5) with a bearing surface (5') exhibiting a form conjugate to that of the face of the substrate (2) that is opposite to the face (2') to be covered, and which is provided with a lower part (6') of a peripheral clamping or pinching frame (6) surrounding said support (5), but beyond which there projects from beneath at least one specific lateral support portion (7),
disposing the substrate (2) to be covered on the support (5) such that said at least one particular peripheral substrate portion (4) rests on said at least one specific lateral support portion (7),
providing a section (3') of skin (3) of a size adapted to the frame (6),
providing a thermo-adhesive or cold-bonding adhesive substance (8) which is added to the substrate (2) or to the rear face of the skin (3),
disposing said skin (3), where appropriate after heating, on the substrate (2) mounted on the support (5), with interposition of the layer of adhesive substance (8) and such that it laterally projects beyond the lower frame part (6') over the entire circumference of the latter, providing and supplying an upper clamping or pinching frame part (6"), of complementary form to the lower frame part (6'),
pinching the skin (3) in an airtight manner between the two mutually cooperating, complementary frame parts (6' and 6"),
generating an aspiration or suction effect through the substrate (2) so as to intimately apply that part of the section (3') of skin (3) that is located inside the frame (6) against the substrate (2),
moving the upper frame part (6") away, possibly after a predetermined time has elapsed, and
withdrawing the part (1) formed by the substrate (2) partially covered by the skin (3), and cutting off, where appropriate, the portions of the skin (3) that are not secured to the substrate (2).

2. Method according to Claim 1, **characterized in that** said at least one specific lateral support portion (7) is, at least during the aspiration phase, located in a corresponding lateral chamber (9) which, together with the substrate support (5), with the lower part (6') of the pinching or clamping frame (6) and with the skin (3), can form a substantially airtight chamber.

3. Method according to Claim 2, **characterized in that** the or each lateral chamber (9) is formed by the interior volume of a local lateral protuberance (6‴) of the lower frame part (6'), in one piece therewith or added thereto and defining a cavity or pocket which is open towards the inside of said frame (6) and hermetically sealed with respect to the external environment.

4. Method according to Claim 3, **characterized in that**, while the substrate (2) is being placed on the support (5), the particular peripheral substrate portion (4) in question is introduced into the corresponding lateral chamber (9) through an opening (11) delimited conjointly by a cutout (12) or a separable segment (10) of the lower frame part (6') and by the specific lateral support portion (7) extending through this cutout (12), the edge of said cutout (12) setting the boundary between the portions of the visible face (1') of the part (1) that respectively are covered by and free of skin (3).

5. Method according to Claim 4, **characterized in that** the particular peripheral substrate portion (4) is slid through the opening (11) while the substrate (2) is being placed, said substrate (2) preferably coming to bear against the edge of the cutout (12), advantageously over the entire width of the opening (11).

6. Method according to any one of Claims 2 to 4, **characterized in that** the lateral chamber (9) has a flap (9'') forming a cover, for example a pivoting cover, which is moved between an open position, in which the particular peripheral substrate portion (4) in question can be easily disposed on or removed from the specific lateral support portion (7), while the substrate (2) is being placed on the support (5) or while the trim part (1) is being removed, and a closed position, in which the lateral chamber (9) forms a sealed pocket with the frame (6), at least during the aspiration phase.

7. Method according to Claim 6, **characterized in that** the movable flap (9') comprises or incorporates a separable segment (10) of the lower frame part (6'), which is positioned in the continuation of and is attached to the rest of said lower frame part (6') when said flap (9") is in the closed position.

8. Method according to either one of Claims 6 and 7, **characterized in that** the particular peripheral substrate portion (4) is pinched, preferably in an airtight manner, between the substrate support (5) and the flap (9"), when the latter is in the closed position.

9. Method according to any one of Claims 1 to 8, **characterized in that**, before being placed on the substrate support (5), the substrate (2) is subjected to an air-permeabilization operation, when its constituent wall is not made of a naturally gas-permeable material.

10. Device (13) for manufacturing a laminated trim part (1) using the method according to any one of Claims 1 to 9, said device (13) comprising a substrate support (5) peripherally provided with a lower part (6') of a clamping or pinching frame (6) and being able to be connected selectively to a source of vacuum or aspiration and a complementary upper part (6") of said frame (6), the two, lower and upper, frame parts (6' and 6") being configured to pinch a section (3') of skin (3) between them in a sealed manner,
said device (13) being **characterized in that** at least one specific lateral portion (7) of the substrate support (5) is located on the outside of the lower frame part (6'), preferably in a chamber (9) laterally adjoining this part.

11. Laminated trim part (1), in particular interior trim part for a motor vehicle, comprising a substrate (2), for example in the form of a plate or panel with a three-dimensional structure, in particular made of an air-permeable material, and a substantially airtight skin (3) added to the substrate (2) by lamination under vacuum and adhesive bonding to form the visible face (1') of the part (1), said part (1) being obtained using the manufacturing method according to any one of Claims 1 to 9 and being **characterized in that** it has at least one particular peripheral lateral portion or zone (4) of the substrate (2) that is free of skin (3), such that the visible face (1') of the part (1) has portions respectively covered by and free of skin (3).
